# FASCICULE DE BREVET EUROPEEN

(11) **EP 2 123 202 B1**
(45) Date de publication et mention de la délivrance du brevet: **05.01.2011**
(21) Numéro de dépôt: 09160923.0
(22) Date de dépôt: 22.05.2009
(51) Int. Cl.: A47J 37/07, F24C 15/20

(54) **Dispositif de cuisson**
Kochvorrichtung
Cooking device

(30) Priorité: 23.05.2008 FR 0853354
(43) Date de publication de la demande: 25.11.2009
(73) Titulaire: Di Giandomenico, Corrado, 74320 Sevrier (FR)
(72) Inventeur: Di Giandomenico, Corrado, 74320 Sevrier (FR)
(74) Mandataire: Poncet, Jean-François

(56) Documents cités:
- DE-U1- 20 006 950
- GB-A- 2 313 294
- US-B1- 7 044 050

## Description

La présente invention concerne un dispositif de cuisson destiné à être utilisé dans une salle de restaurant, directement par les clients.

On connaît déjà divers dispositifs permettant une cuisson en self-service dans une salle de restaurant.

Par exemple, un appareil portable à plaque de cuisson électrique peut être posé sur une table, les convives pouvant poser sur la plaque des pièces de nourriture à cuire.

Un autre exemple est un grill portable contenant du charbon de bois et sur lequel les convives peuvent également poser des pièces de nourriture à cuire.

Ces dispositifs présentent l'inconvénient de produire des fumées qui sont difficiles à évacuer car elles se propagent dans l'ensemble du restaurant.

D'autre part, de tels dispositifs ne permettent pas une cuisson efficace à feu vif, car cela nécessiterait un dégagement de chaleur trop important pour autoriser un positionnement directement sur une table entre les convives.

On connaît par ailleurs des dispositifs tels qu'un foyer de cheminée, dans lequel des convives peuvent disposer des pièces de nourriture à cuire. Cependant, de tels foyers ne sont pas bien adaptés pour assurer à la fois un accès aisé pour disposer et retirer la nourriture, et une protection efficace contre les projections de braises ou de nourriture.

Le document DE 200 06 950 U décrit un grill transportable ayant un bâti inférieur avec un foyer central à grill et cendrier entouré de bacs périphériques de récupération de graisses. Le bâti inférieur est surmonté d'un caisson formant compartiment de cuisson et muni d'ouvertures latérales vitrées d'introduction de nourriture. Une hotte d'aspiration surmonte le caisson. Ce dispositif ne permet pas un accès multiple et aisé à la nourriture, et une vision satisfaisante.

Le problème proposé par la présente invention est de permettre une cuisson en libre service en salle de restaurant sur foyer à feu de bois ou charbon de bois, en assurant une cuisson efficace à feu vif et une évacuation correcte des fumées, sans risque de détérioration du dispositif par la chaleur dégagée par le foyer.

Pour assurer une cuisson efficace à feu vif, il est nécessaire que le foyer dégage une chaleur importante, et il est nécessaire d'évacuer des fumées en grande quantité.

Simultanément, la cuisson en libre service nécessite un accès permanent au foyer, pour introduire et retirer la nourriture à cuire. Cela implique la présence d'ouvertures, qui risquent alors de laisser échapper des fumées dans la salle.

Pour éviter en partie l'échappement des fumées, et produire un feu vif, une solution est d'assurer une ventilation forcée du foyer, par aspiration supérieure et entrée d'air inférieure.

Mais la chaleur transitant par l'aspiration est très élevée, et on a constaté un risque important de dégradation rapide des moyens de ventilation forcée. Il faut donc prévoir des moyens particuliers pour éviter la dégradation du dispositif.

Pour atteindre ces buts ainsi que d'autres, l'invention propose un dispositif de cuisson sur foyer à feu de bois ou charbon de bois en salle de restaurant, comprenant :
- un bâti inférieur, ayant un fond de foyer,
- un caisson supérieur vitré, surmonté d'une hotte d'aspiration,
- un passage latéral intermédiaire, ménagé à la base du caisson supérieur vitré, pour introduire et retirer de la nourriture à cuire,
- des orifices de ventilation prévus dans le fond de foyer,
dans lequel :
- le fond de foyer occupe sensiblement toute la face supérieure du bâti inférieur,
- le fond de foyer est entouré d'une murette périphérique,
- le passage latéral intermédiaire occupe l'espace périphérique entre la base du caisson supérieur vitré et le bord supérieur de la murette périphérique,
- le caisson supérieur est vitré selon la périphérie du dispositif,
- le bâti inférieur avec le caisson supérieur et la hotte d'aspiration sont placés dans la salle de restaurant,
- on prévoit un système d'entrée d'air extérieur, avec des orifices de ventilation ménagés dans le fond de foyer, et avec des moyens de conduction d'air pour conduire l'air depuis l'atmosphère extérieure à la salle de restaurant jusqu'au orifices de ventilation,
- on prévoit un système d'aspiration, connecté à la hotte d'aspiration par au moins une canalisation d'aspiration, apte à aspirer l'atmosphère intérieure du caisson supérieur vitré et à refouler les gaz et fumées dans l'atmosphère extérieure à la salle de restaurant,
- dans le système d'aspiration, une turbine d'aspiration est entraînée en rotation par un moteur électrique et connectée à la canalisation d'aspiration au voisinage de sa sortie dans l'atmosphère extérieure à la salle de restaurant.

Un tel dispositif assure un accès aisé pour introduire et retirer la nourriture à travers le passage latéral intermédiaire. Grâce à la faible dimension en hauteur du passage latéral intermédiaire, le dispositif assure simultanément une protection contre les projections éventuelles et les productions de fumées. En pratique, on pourra avantageusement choisir une hauteur comprise entre 8 et 15 cm environ, qui assure un bon compris entre la facilité de passage de la nourriture à cuire et la protection de l'utilisateur contre les projections éventuelles et les productions de fumées. Le caisson supérieur vitré permet aux utilisateurs de voir l'intérieur du dispositif, pour contrôler visuellement le positionnement et la cuisson de la nourriture.

Simultanément, l'aspiration assure une combustion efficace, pour produire un feu vif qui permet une cuisson rapide et contrôlée.

De préférence, la turbine d'aspiration comporte une entrée d'aspiration axiale et une sortie de refoulement radiale, et le moteur électrique est déporté axialement en aval de la turbine d'aspiration et est raccordé mécaniquement à la turbine d'aspiration par un arbre axial.

De la sorte, le moteur électrique est protégé contre un échauffement excessif dû à la forte température des gaz évacués par le système d'aspiration, ce qui évite sa détérioration progressive, et ce qui assure une bonne fiabilité du dispositif.

Selon un mode de réalisation préféré, la canalisation d'aspiration est structurée de façon à supporter sans dégradation une température intérieure de 1 100°C.

Il n'est pas nécessaire que la canalisation supporte en permanence une température aussi élevée, mais l'expérience a montré qu'une durabilité suffisante de l'installation nécessite de choisir une telle structure de canalisation d'aspiration.

En pratique, la canalisation d'aspiration peut comporter une paroi intérieure à tronçons tubulaires d'acier soudés les uns à la suite des autres et entourés d'un manchon isolant thermique en matériau fibreux. Une telle structure permet de supporter les températures intérieures nécessaires, sans dégradation.

Le moteur électrique du système d'aspiration est de préférence un moteur triphasé, qui supporte de façon plus efficace les élévations de température.

D'autres objets, caractéristiques et avantages de la présente invention ressortiront de la description suivante de modes de réalisation particuliers, faite en relation avec les figures jointes, parmi lesquelles :
- la figure 1 est une vue de face d'un dispositif de cuisson selon un mode de réalisation de la présente invention ;
- la figure 2 est une vue de côté du dispositif de la figure 1 ;
- la figure 3 est une vue schématique en perspective du dispositif des figures 1 et 2;
- la figure 4 est une vue partielle montrant, en perspective, l'intérieur du dispositif des figures 1 à 3 ;
- la figure 5 illustre, en perspective, le dispositif d'aspiration ;
- la figure 6 illustre en perspective une structure de canalisation d'aspiration selon un mode de réalisation de l'invention ; et
- les figures 7 à 9 illustrent trois modes de réalisation de moyens pour manipuler la nourriture dans le dispositif de cuisson.

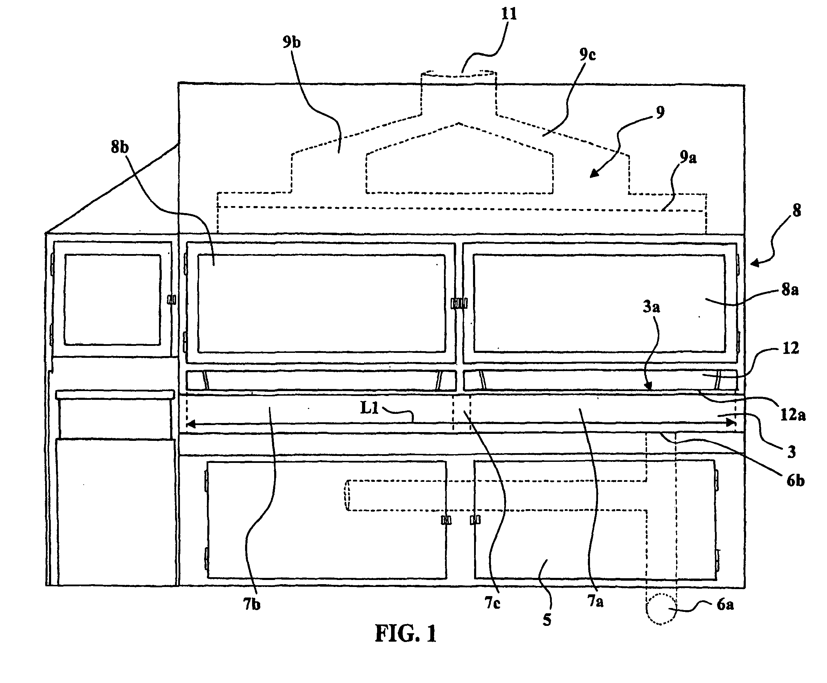

Dans le mode de réalisation illustré sur les figures 1 à 6, un dispositif de cuisson selon l'invention comprend un bâti inférieur 1 ayant une surface supérieure 2 formant fond de foyer et entourée d'une murette périphérique 3.

Le bâti inférieur 1 repose sur le sol, et forme un caisson 4 muni d'au moins une ouverture latérale 5 d'accès.

On prévoit un système d'entrée d'air extérieur 6 pour amener de l'air de combustion dans le foyer 7. Pour cela, une canalisation d'entrée d'air 6a communique avec le foyer 7 par des orifices de ventilation 6b prévus dans le fond de foyer 2, et est structurée pour constituer des moyens de conduction d'air pour amener de l'air depuis l'atmosphère extérieure E jusqu'aux orifices de ventilation 6b.

Le fond de foyer 2 et la murette périphérique 3 définissent un espace intérieur constituant un foyer 7 dimensionné de façon à contenir les éléments combustibles nécessaires.

En pratique, le foyer 7 peut avoir une hauteur H d'environ 18 à 20 cm, une longueur L1 d'environ 300 cm, et une largeur L2 d'environ 90 cm, sa forme étant sensiblement parallélépipédique.

La longueur L1 du foyer 7 peut être divisée par une paroi intermédiaire 7c en au moins deux tronçons successifs 7a et 7b (figures 1, 3 et 4) occupant chacun sensiblement la moitié de la longueur L1. Dans ce cas, chaque tronçon de foyer 7a et 7b comprend, dans son fond, un orifice de ventilation inférieur respectif tel que l'orifice 6b pour communiquer avec la canalisation d'entrée d'air 6a.

Le dispositif comprend en outre un caisson supérieur vitré 8, surmonté d'une hotte d'aspiration 9.

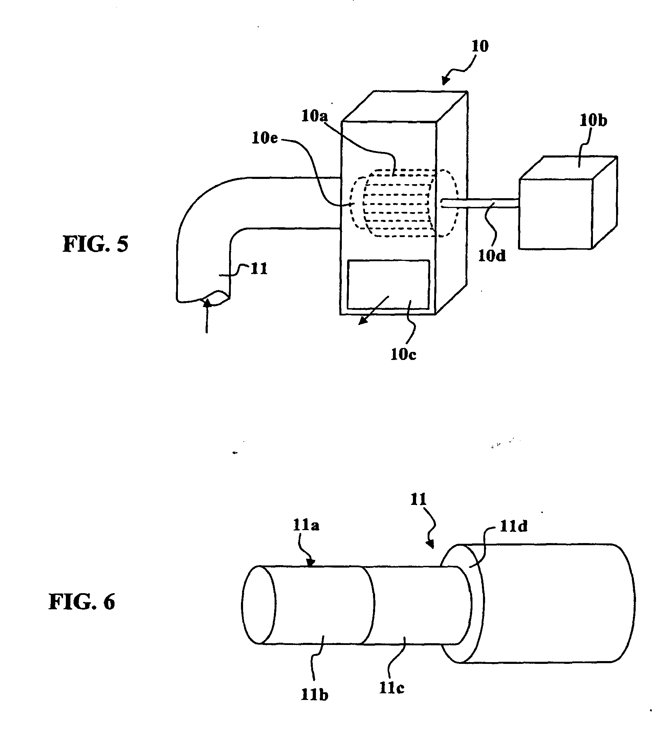

Un système d'aspiration 10 (figure 5) est connecté à la hotte d'aspiration 9 par au moins une canalisation d'aspiration 11.

Le système d'aspiration 10 permet d'aspirer l'atmosphère intérieure du caisson supérieur vitré 8 et de refouler les gaz et fumées dans l'atmosphère extérieure E.

Un passage latéral intermédiaire 12 est ménagé entre la base du caisson supérieur vitré 8 et le bord supérieur 3a de la murette périphérique 3. Le passage latéral intermédiaire 12 peut avantageusement avoir une hauteur H12 de 8 à 15 cm environ, avantageusement de 10 cm environ, apte à permettre le passage pour introduire et retirer la nourriture à cuire.

Le fond de foyer 2 occupe sensiblement toute la face supérieure du bâti inférieure 1, la murette périphérique 3 suivant la périphérie du bâti inférieur 1. De la sorte, le passage latéral intermédiaire 12 est à la fois en périphérie du dispositif et adjacent au foyer 2, pour un accès aisé au foyer 2.

Le passage latéral intermédiaire 12 occupe de préférence toute la périphérie du dispositif, sur les quatre côtés entre le caisson supérieur vitré 8 et le foyer 7, et se trouve à une hauteur moyenne H3 d'environ 1 mètre au-dessus du sol.

Dans le système d'aspiration 10, sur la figure 5, on prévoit une turbine d'aspiration 10a à entrée d'aspiration axiale 10e et sortie de refoulement radiale 10c. La turbine d'aspiration 10a est entraînée en rotation par un moteur électrique 10b, et est connectée à la canalisation d'aspiration 11 au voisinage de sa sortie dans l'atmosphère extérieure E. En pratique, la turbine d'aspiration 10a est une turbine radiale, qui aspire axialement par son entrée d'aspiration axiale 10e les gaz et fumées provenant de la canalisation d'aspiration 11, et qui rejette radialement les gaz et fumées par sa sortie de refoulement radiale 10c. La canalisation d'aspiration 11 est raccordée axialement à l'entrée d'aspiration axiale 10e de la turbine d'aspiration 10a, tandis que le moteur 10b est relié à la turbine d'aspiration 10a par un arbre 10d axial à l'opposé de l'entrée d'aspiration axiale 10e.

Le moteur électrique 10b est déporté axialement en aval de la turbine d'aspiration 10a, et est raccordé mécaniquement à la turbine d'aspiration 10a par l'arbre axial 10d.

Comme illustré sur la figure 6, la canalisation d'aspiration 11 est structurée sous forme d'un paroi intérieure 11a formée de plusieurs tronçons tubulaires d'acier tels que les tronçons 11b et 11c, soudés les uns à la suite des autres, et entourés d'un manchon isolant thermique 11d, en matériau fibreux.

Une telle structure de canalisation d'aspiration 11 permet de supporter une température intérieure très élevée, par exemple de l'ordre de 1 100°C, afin de supporter sans vieillissement prématuré les températures élevées des gaz et fumées aspirés par le dispositif.

Le moteur 10b est un moteur électrique triphasé, de façon à bénéficier de la robustesse de tels moteurs pour fonctionner correctement dans des conditions climatiques très changeantes.

En effet, le système d'aspiration 10 est de préférence disposé sur le toit d'un bâtiment contenant la salle de restaurant R.

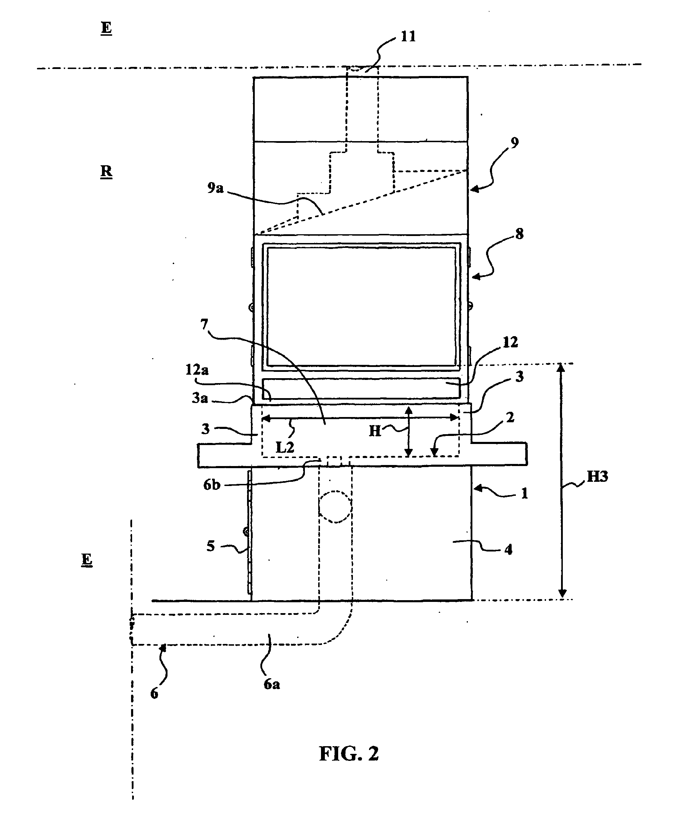

En considérant à nouveau les figures 1 et 2, la hotte d'aspiration 9 occupe toute la partie supérieure du caisson supérieur vitré 8, et comporte une paroi filtrante métallique 9a, de préférence inclinée comme on le voit sur la figure 2.

La paroi filtrante métallique 9a fait office de filtre pour retenir la majeure partie des graisses, et fait également office de barrière contre la propagation de flammes vers le système d'aspiration 10.

En pratique, la hotte d'aspiration 9 peut être divisée en deux tronçons selon la longueur du dispositif, chaque tronçon de hotte d'aspiration correspondant à l'un des tronçons 7a et 7b du foyer 7. Chaque tronçon de hotte d'aspiration peut comporter une sortie d'aspiration supérieure pour se raccorder à la canalisation d'aspiration 11.

On distingue notamment, sur la figure 1, les deux sorties d'aspiration supérieures 9b et 9c.

Le passage latéral intermédiaire 12 est bordé, en partie inférieure, par un support tubulaire métallique 12a surmontant le bord supérieur 3a de la murette périphérique 3. Le support tubulaire métallique 12a présente une section carrée d'environ 25 mm de côté, et constitue ainsi un support de plus faible largeur que la surface du bord supérieur 3a de la murette périphérique 3.

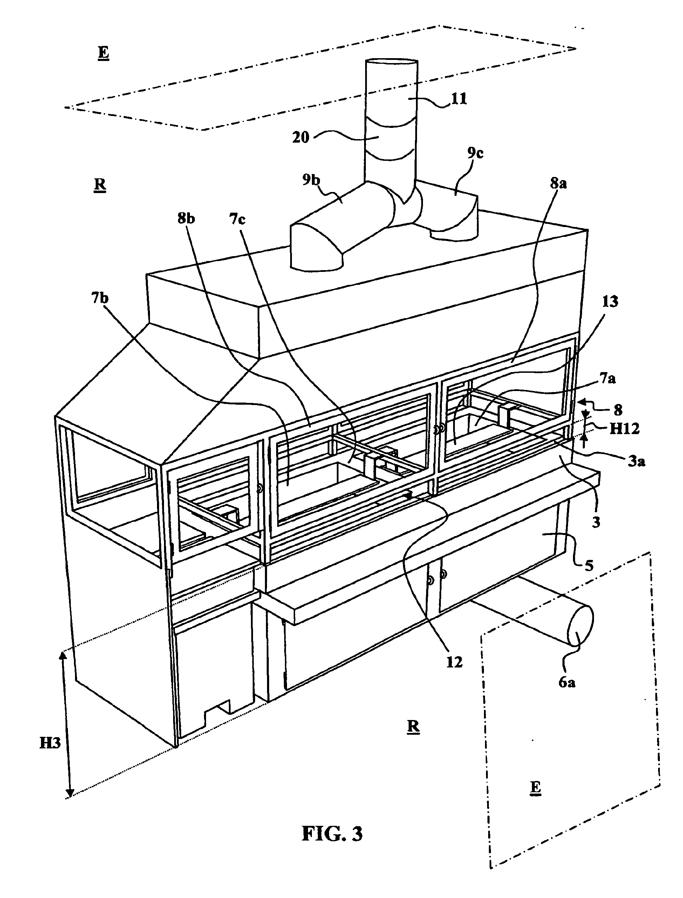

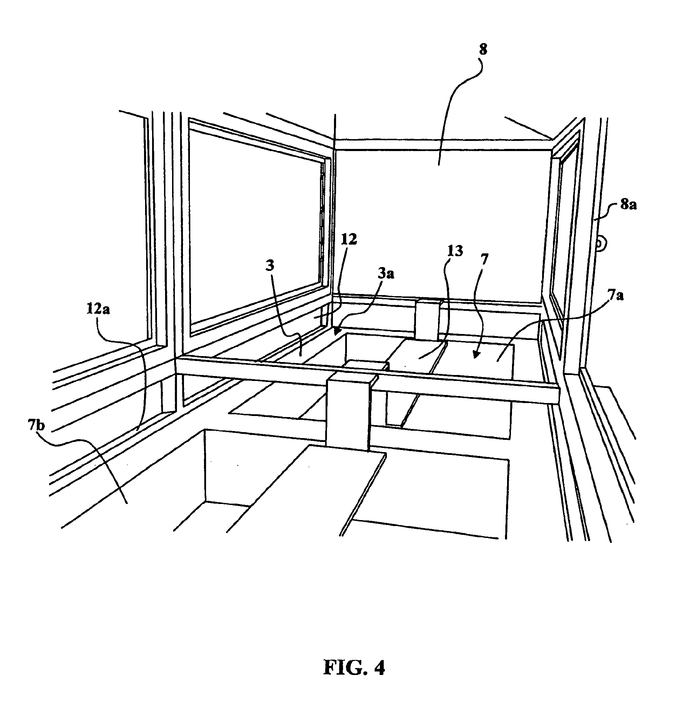

Comme on le voit en perspective sur les figures 3 et 4, le foyer 7 présente un contour rectangulaire, et comprend un support longitudinal médian 13, métallique, sous forme d'une bande allongée longitudinale d'environ 15 cm de large, tenue sensiblement à la hauteur du bord inférieur du passage latéral intermédiaire 12, par exemple à la hauteur du bord supérieur du support tubulaire métallique 12a.

Le caisson supérieur vitré 8 est constitué d'une structure métallique réalisée par assemblage de tubes métalliques, formant un ensemble généralement parallélépipédique. Les faces principales du caisson supérieur vitré 8 sont constituées de portes vitrées telles que les portes 8a et 8b, qu'il est possible de faire pivoter pour le nettoyage de la face intérieure des vitres.

L'expérience a montré que l'utilisation de verre sécurité d'épaisseur 8 mm peut convenir pour une telle application, un tel choix ne faisant pas courir le risque de casser les vitres, tout en restant d'un prix raisonnable.

Pour son utilisation, un tel dispositif de cuisson peut être placé dans l'intérieur d'un bâtiment, constituant par exemple un dispositif de cuisson dans la salle de restaurant R. L'air de combustion est aspiré depuis l'atmosphère extérieure E, et les fumées sont évacuées vers l'atmosphère extérieure E.

En pratique, le dispositif de cuisson tel qu'illustré peut avantageusement comprendre une pluralité de brochettes à deux pics 15 et/ou une pluralité de grilles 17 et/ou une pluralité de récipients 16 conformés pour reposer à la fois sur le support tubulaire métallique 12a et sur le support longitudinal médian 13.

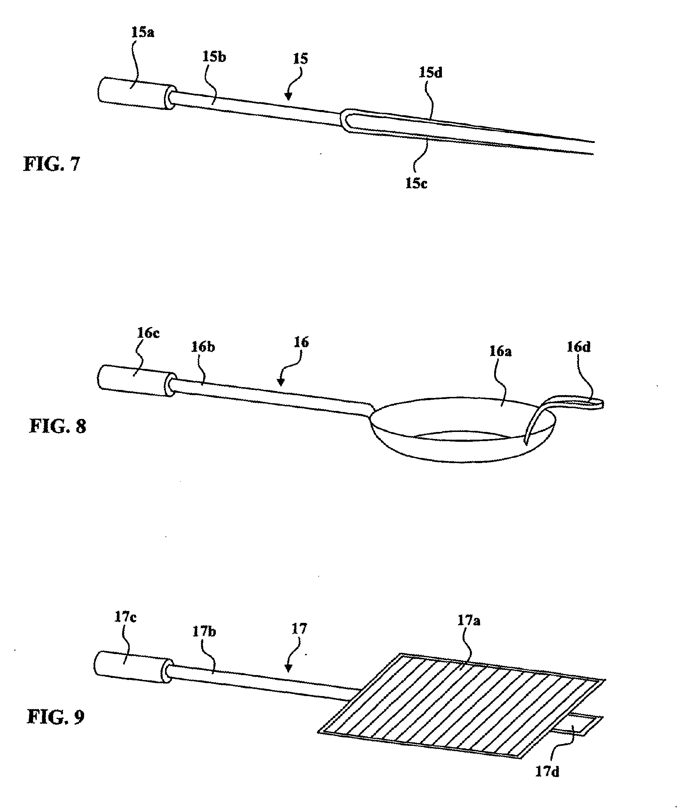

Ainsi, la nourriture peut avantageusement être tenue par des brochettes à deux pics 15 telles qu'illustrées sur la figure 7. Une telle brochette 15 comporte une poignée 15a en bout d'une tige centrale 15b qui se raccorde à deux pics longitudinaux parallèles 15c et 15d. Par exemple, un morceau de viande peut être embroché sur les deux pics 15c et 15d, de sorte que la viande ne tourne pas par rapport à la brochette 15. L'utilisateur peut ainsi orienter le morceau de viande par rapport au foyer 7. La longueur de la brochette 15 est telle que l'extrémité libre des pics 15c et 15b peut reposer sur le support longitudinal médian 13 du foyer 7, tandis que la tige centrale 15b peut reposer sur le support tubulaire métallique 12a. Ainsi, la poignée 15a dépasse vers l'extérieur, et reste directement accessible pour la préhension car décollée du bord supérieur 3a de la murette périphérique 3.

Selon une autre possibilité, la nourriture peut être placée dans un récipient 16 illustré sur la figure 8. Le récipient 16 comprend une coupelle 16a, par exemple d'un diamètre d'environ 12 cm, munie d'une tige de préhension 16b avec une poignée d'extrémité 16c, et munie par exemple d'une tige de maintien 16d diamétralement opposée. La tige de maintien 16d peut reposer sur le support longitudinal médian 13 du foyer 7, tandis que la tige de préhension 16b peut reposer sur le support tubulaire métallique 12a, la poignée d'extrémité 16c restant accessible à l'extérieur pour la préhension. Ce récipient 16 peut par exemple être utilisé pour faire fondre du fromage.

Le dispositif selon l'invention peut aussi être utilisé pour griller de la viande en forme de plaque. Il est alors utile d'utiliser une grille 17 illustrée sur la figure 9, comportant un réseau maillé plan 17a pour supporter la nourriture, munie d'une tige de préhension 17b avec poignée 17c, et munie à l'opposé d'une tige support 17d. La tige support 17d peut reposer sur le support longitudinal médian 13 du foyer 7, tandis que la tige de préhension 17b peut reposer sur le support tubulaire métallique 12a.

Dans le foyer 7, on peut disposer un combustible solide tel que du charbon de bois, réparti sur le fond de foyer 2. Après allumage du combustible, la rotation du moteur 10b assure l'aspiration des gaz et fumées, et favorise la combustion du charbon de bois dans le foyer 7, grâce au système d'entrée d'air extérieur 6. La hauteur réduite du passage latéral intermédiaire 12 permet d'éviter l'échappement de fumées dans le local contenant le dispositif.

La structuration du foyer 7 en au moins deux tronçons 7a et 7b permet à l'utilisateur d'utiliser indépendamment un seul tronçon 7a, ou plusieurs tronçons 7a et 7b, pour adapter le débit de cuisson désiré en fonction du nombre de clients à servir dans le restaurant.

La figure 3 illustre un perfectionnement selon lequel on prévoit un échangeur de chaleur air-eau 20, interposé dans la canalisation d'aspiration 12. En alternative, l'échangeur de chaleur 20 est placé dans la hotte d'aspiration 9.

Par sa position entre le foyer 7 et la turbine d'aspiration 10a, l'échangeur de chaleur 20 assure une fonction de réduction de l'échauffement de la turbine d'aspiration 10a, tout en permettant une utilisation annexe de la chaleur récupérée.

La présente invention n'est pas limitée aux modes de réalisation qui ont été explicitement décrits, mais elle en inclut les diverses variantes et généralisations contenues dans le domaine des revendications ci-après.

## Revendications

1. Dispositif de cuisson sur foyer (7) à feu de bois ou charbon de bois en salle de restaurant (R), comprenant :
- un bâti inférieur (1), ayant un fond de foyer (2),
- un caisson supérieur vitré (8), surmonté d'une hotte d'aspiration (9),
- un passage latéral intermédiaire (12), ménagé à la base du caisson supérieur vitré (8), pour introduire et retirer de la nourriture à cuire,
- des orifices de ventilation (6b) prévus dans le fond de foyer (2),
**caractérisé en ce que** :
- le fond de foyer (2) occupe sensiblement toute la face supérieure du bâti inférieur (1),
- le fond de foyer (2) est entouré d'une murette périphérique (3),
- le passage latéral intermédiaire (12) occupe l'espace périphérique entre la base du caisson supérieur vitré (8) et le bord supérieur (3a) de la murette périphérique (3),
- le caisson supérieur (8) est vitré selon la périphérie du dispositif,
- le bâti inférieur (1) avec le caisson supérieur (8) et la hotte d'aspiration (9) sont placés dans la salle de restaurant (R),
- on prévoit un système d'entrée d'air extérieur (6), avec des orifices de ventilation (6b) ménagés dans le fond de foyer (2), et avec des moyens de conduction d'air (6a) pour conduire l'air depuis l'atmosphère extérieure à la salle de restaurant (R) jusqu'au orifices de ventilation (6b),
- on prévoit un système d'aspiration (10), connecté à la hotte d'aspiration (9) par au moins une canalisation d'aspiration (11), apte à aspirer l'atmosphère intérieure du caisson supérieur vitré (8) et à refouler les gaz et fumées dans l'atmosphère extérieure à la salle de restaurant (R),
- dans le système d'aspiration (10), une turbine d'aspiration (10a) est entraînée en rotation par un moteur électrique (10b) et connectée à la canalisation d'aspiration (11) au voisinage de sa sortie dans l'atmosphère extérieure à la salle de restaurant (R).

2. Dispositif selon la revendication 1, **caractérisé en ce que** la turbine d'aspiration (10a) comporte une entrée d'aspiration axiale (10e) et une sortie de refoulement radiale (10c), et le moteur électrique (10b) est déporté axialement en aval de la turbine d'aspiration (10a) et est raccordé mécaniquement à la turbine d'aspiration (10a) par un arbre axial (10d).

3. Dispositif selon l'une des revendications 1 ou 2, **caractérisé en ce que** la canalisation d'aspiration (11) est structurée de façon à supporter une température intérieure de 1 100°C.

4. Dispositif selon la revendication 3, **caractérisé en ce que** la canalisation d'aspiration (11) comporte une paroi intérieure (11a) à tronçons tubulaires d'acier soudés les uns à la suite des autres et entourés d'un manchon isolant thermique (11 d) en matériau fibreux.

5. Dispositif selon l'une quelconque des revendications 1 à 4, **caractérisé en ce que** le moteur électrique (10b) est un moteur triphasé.

6. Dispositif selon l'une quelconque des revendications 1 à 5, **caractérisé en ce que** la hotte d'aspiration (9) comporte une paroi filtrante métallique (9a).

7. Dispositif selon l'une quelconque des revendications 1 à 6, **caractérisé en ce que** le passage latéral intermédiaire (12) a une hauteur de 8 à 15 cm environ, avantageusement de 10 cm environ.

8. Dispositif selon l'une quelconque des revendications 1 à 7, **caractérisé en ce que** le passage latéral intermédiaire (12) est bordé, en partie inférieure, par un support tubulaire métallique (12a) surmontant le bord supérieur (3a) de la murette périphérique (3).

9. Dispositif selon la revendication 8, **caractérisé en ce que** le foyer (7) présente un contour rectangulaire, et comprend un support longitudinal médian (13) métallique sensiblement à la hauteur du bord inférieur du passage latéral intermédiaire (12).

10. Dispositif selon l'une quelconque des revendications 1 à 9, **caractérisé en ce que** le foyer (7) présente une largeur (L2) d'environ 90 cm, et sa longueur (L1) d'environ 300 cm est divisée en au moins deux tronçons successifs (7a, 7b) ayant chacun un orifice de ventilation (6b) inférieur et une sortie d'aspiration supérieure (9b, 9c) dans la hotte d'aspiration (9).

11. Dispositif selon la revendication 9 dans son rattachement à la revendication 8, **caractérisé en ce qu'**il comprend une pluralité de brochettes à deux pics (15) et/ou une pluralité de grilles (17) et/ou une pluralité de récipients (16) conformés pour reposer à la fois sur le support tubulaire métallique (12a) et sur le support longitudinal médian (13).

12. Dispositif selon l'une quelconque des revendications 1 à 11, **caractérisé en ce qu'**il comprend un échangeur de chaleur air-eau (20) interposé dans la canalisation d'aspiration (11) ou dans la hotte d'aspiration (9).

## Claims

1. Device for cooking on a wood- or charcoalburning stove (7) in a restaurant (R), comprising:
- a lower structure (1) having a stove bottom (2),
- a glazed upper box structure (8) surmounted by an extractor hood (9),
- an intermediate lateral passage (12), formed at the base of the glazed upper box structure (8), for the introduction and removal of the food to be cooked,
- ventilation orifices (6b) provided in the stove bottom (2),
**characterised in that**:
- the stove bottom (2) occupies approximately all of the upper face of the lower structure (1),
- the stove bottom (2) is surrounded by a low peripheral wall (3),
- the intermediate lateral passage (12) occupies the peripheral space between the base of the glazed upper box structure (8) and the upper edge (3a) of the low peripheral wall (3),
- the upper box structure (8) is glazed around the periphery of the device,
- the lower structure (1) with the upper box structure (8) and the extractor hood (9) are installed in the restaurant (R),
- provision is made of an external-air inlet system (6) having ventilation orifices (6b) formed in the stove bottom (2) and having air-conducting means (6a) for conducting air from the atmosphere outside the restaurant (R) as far as the ventilation orifices (6b),
- provision is made of an extractor system (10), which is connected to the extractor hood (9) by at least one extraction line (11) able to extract the atmosphere inside the glazed upper box structure (8) and convey the gases and smoke to the atmosphere outside the restaurant (R) ,
- in the extractor system (10), an extraction turbine (10a) is rotated by an electric motor (10b) and connected to the extraction line (11) near its outlet into the atmosphere outside the restaurant (R).

2. Device according to claim 1, **characterised in that** the extraction turbine (10a) has an axial extraction inlet (10e) and a radial conveying outlet (10c), and the electric motor (10b) is offset axially downstream of the extraction turbine (10a) and is connected mechanically to the extraction turbine (10a) by an axial shaft (10d).

3. Device according to one of claims 1 or 2, **characterised in that** the extraction line (11) is structured to withstand an internal temperature of 1 100°C.

4. Device according to claim 3, **characterised in that** the extraction line (11) has an internal wall (11a) having tubular steel sections welded together in succession and surrounded by a thermally insulating sleeve (11d) made of fibrous material.

5. Device according to any one of claims 1 to 4, **characterised in that** the electric motor (10b) is a three-phase motor.

6. Device according to any one of claims 1 to 5, **characterised in that** the extractor hood (9) has a metal filter wall (9a).

7. Device according to any one of claims 1 to 6, **characterised in that** the intermediate lateral passage (12) has a height of around 8 to 15 cm, advantageously around 10 cm.

8. Device according to any one of claims 1 to 7, **characterised in that** the intermediate lateral passage (12) is bordered, in the lower part, by a tubular metal support (12a) surmounting the upper edge (3a) of the low peripheral wall (3).

9. Device according to claim 8, **characterised in that** the stove (7) has a rectangular contour and comprises a middle longitudinal metal support (13) approximately level with the lower edge of the intermediate lateral passage (12).

10. Device according to any one of claims 1 to 9, **characterised in that** the stove (7) has a width (L2) of approximately 90 cm, and its length (L1) of approximately 300 cm is divided into at least two successive sections (7a, 7b) each having a lower ventilation orifice (6b) and an upper extraction outlet (9b, 9c) in the extractor hood (9).

11. Device according to claim 9 where dependent on claim 8, **characterised in that** it comprises a plurality of two-prong skewers (15) and/or a plurality of grills (17) and/or a plurality of containers (16) designed to rest both on the tubular metal support (12a) and on the middle longitudinal support (13).

12. Device according to any one of claims 1 to 11, **characterised in that** it comprises an air-water heat exchanger (20) inserted into the extraction line (11) or into the extractor hood (9).

## Patentansprüche

1. Vorrichtung in einem Restaurant-Speisesaal (R) zum Garen von Speisen auf einem Herd (7) mit Holzfeuer oder Holzkohlenfeuer, umfassend:
- ein Untergestell (1) mit einem Herdboden (2),
- einen oberen, verglasten Kasten (8), über dem eine Abzugshaube (9) angeordnet ist,
- eine dazwischen liegende, seitliche Durchgangsöffnung (12), die im unteren Teil des oberen, verglasten Kastens (8) angeordnet ist und zum Einführen und Entnehmen der Speisen dient,
- Belüftungsöffnungen (6b) im Herdboden (2),
**gekennzeichnet durch** die folgenden Merkmale:
- der Herdboden (2) nimmt im Wesentlichen die gesamte Oberseite des Untergestells (1) ein,
- der Herdboden (2) ist von einer umlaufenden, niedrigen Wand (3) umschlossen,
- die seitliche Durchgangsöffnung (12) nimmt den umlaufenden Raum zwischen dem unteren Teil des verglasten Kastens (8) und dem oberen Rand (3a) der umlaufenden Wand (3) ein,
- der obere Kasten (8) ist auf dem Umfang der Vorrichtung verglast,
- das Untergestell (1) mit dem oberen Kasten (8) und der Abzugshaube (9) sind im Restaurant-Speisesaal (R) untergebracht,
- es ist ein System (6) zum Zuführen von Außenluft mit Belüftungsöffnungen (6b) im Herdboden (2) und mit Luftleitmitteln (6a) vorgesehen, um die Luft von der außerhalb des Restaurant-Speisesaals (R) befindlichen Atmosphäre bis zu den Belüftungsöffnungen (6b) zu führen,
- es ist ein Absaugsystem (10) vorgesehen, das über wenigstens einen Saugkanal (11) mit der Abzugshaube (9) verbunden und so ausgebildet ist, dass es die innerhalb des verglasten Kastens (8) befindliche Atmosphäre ansaugt und die Gase sowie den Rauch in die Atmosphäre außerhalb des Restaurant-Speisesaals (R) abzuleitet,
- ein innerhalb des Absaugsystems (10) befindliches Sauggebläse (10a) wird von einem Elektromotor (10b) in Drehung versetzt und ist mit dem Saugkanal (11) in der Nähe seines Ausgangs in die Außenatmosphäre außerhalb des Restaurant-Speisesaales (R) verbunden.

2. Vorrichtung nach Anspruch 1, **dadurch gekennzeichnet, dass** das Sauggebläse (10a) einen axialen Ansaugeingang (10e) und einen radialen Ableitungsausgang (10c) hat und dass der Elektromotor (10b) axial versetzt vor dem Sauggebläse (10a) angeordnet und mit dem Sauggebläse (10a) über eine axiale Welle (10d) mechanisch verbunden ist.

3. Vorrichtung nach Anspruch 1 oder 2, **dadurch gekennzeichnet, dass** der Saugkanal (11) so ausgebildet ist, dass er einer Innentemperatur von 1 100° C standhält.

4. Vorrichtung nach Anspruch 3, **dadurch gekennzeichnet, dass** der Saugkanal (11) eine innere Wand (11a) hat, die aus Stahlrohrabschnitten besteht, die miteinander verschweißt und von einer thermisch isolierenden Hülle (11d) aus Fasermaterial umgeben sind.

5. Vorrichtung nach einem der Ansprüche 1 bis 4, **dadurch gekennzeichnet, dass** der Elektromotor (10b) ein Drehstrommotor ist.

6. Vorrichtung nach einem der Ansprüche 1 bis 5, **dadurch gekennzeichnet, dass** die Abzugshaube (9) eine Metallfilterwand (9a) aufweist.

7. Vorrichtung nach einem der Ansprüche 1 bis 6, **dadurch gekennzeichnet, dass** die seitliche Durchgangsöffnung (12) eine Höhe von etwa 8 bis 15 cm hat, vorzugsweise etwa 10 cm.

8. Vorrichtung nach einem der Ansprüche 1 bis 7, **dadurch gekennzeichnet, dass** die seitliche Durchgangsöffnung (12) im unteren Bereich von einem rohrförmigen Metallträger (12a) begrenzt ist, der über dem oberen Rand (3a) der umlaufenden Wand (3) liegt.

9. Vorrichtung nach Anspruch 8, **dadurch gekennzeichnet, dass** der Herd (7) einen rechteckigen Umriss hat und einen mittleren, metallischen Längsträger (13) hat, der im Wesentlichen in der Höhe des unteren Randes der seitlichen Durchgangsöffnung (12) liegt.

10. Vorrichtung nach einem der Ansprüche 1 bis 9, **dadurch gekennzeichnet, dass** der Herd (7) eine Breite (L2) von etwa 90 cm hat und dass seine Länge (L1) von etwa 300 cm in wenigstens zwei aufeinander folgende Abschnitte (7a, 7b) unterteilt ist, von denen jeder eine untere Belüftungsöffnung (6b) sowie eine obere Absaugöffnung (9b, 9c) in der Abzugshaube (9) hat.

11. Vorrichtung nach Anspruch 9 in Verbindung mit Anspruch 8, **gekennzeichnet durch** eine Mehrzahl von Bratspießen (15) mit zwei Zinken und/oder eine Mehrzahl von Grillgittern (17) und/oder eine Mehrzahl von Pfannen (16), die so ausgebildet sind, dass sie gleichzeitig auf dem rohrförmigen Metallträger (12a) und dem mittleren Längsträger (13) abgelegt werden können.

12. Vorrichtung nach einem der Ansprüche 1 bis 11, **gekennzeichnet durch** einen Luft-Wasser-Wärmetauscher (20), der in den Saugkanal (11) oder in die Abzugshaube (9) eingesetzt ist.
